# EUROPEAN PATENT APPLICATION

(11) **EP 0 695 883 A1**
(43) Date of publication of application: **07.02.1996**
(21) Application number: 95301405.7
(22) Date of filing: 03.03.1995
(51) Int. Cl.: F16B 31/04, B25B 29/02

(54) **Bolt tightening device**

(30) Priority: 27.07.1994 JP 193824/94
(71) Applicant: Kotobuki Sangyo Kabushiki Kaisha, Sapporo-shi, Hokkaido (JP)
(72) Inventor: Yamaguchi, Yoshiaki, c/o Kotobuki Sangyo K. K., Nishi-ku, Sapporo-shi, Hokkaido (JP); Kawamura, Tadashi, c/o Kotobuki Sangyo K. K., Nishi-ku, Sapporo-shi, Hokkaido (JP); Shibuya, Kenji, c/o Kotobuki Sangyo K. K., Nishi-ku, Sapporo-shi, Hokkaido (JP)
(74) Representative: Cheyne, John Robert Alexander Mackenzie

(57) **Abstract**

A bolt tightening device has an output mechanism (A) including a main body formed by a cylinder (1) and a piston (2), a bolt receiving hole (3) extending through the main body, and a space portion (4) formed between the cylinder (1) and piston (2), and an input mechanism (B) including a hollow portion (6) communicating with the space portion (4) and filled with a pressure medium, and a screw plunger (7) movable in the hollow portion (6) to press the pressure medium in the hollow portion (6) and space portion (4). The piston (2) is movable in the cylinder (1) so as to come in contact with the cylinder (1) with the space portion (4) left therebetween. This bolt screwing device can be handled with ease without being held by hand in tightening the bolt (8) and made small in size and light in weight to lessen the labour involved in tightening the bolt (8).

## Description

This invention relates to a bolt tightening device for reducing the labor involved in tightening a bolt to attain labor saving.

The applicant of this invention has proposed a bolt screwing (tightening) device for roller guides in Japanese Unexamined Utility Model Application Publication No. HEI 6-34802. This proposed bolt screwing device comprises a cylinder having a bore space on one side thereof, a piston movable in the bore space of the cylinder and having a leading end portion with a screw hole for receiving a bolt to be tightened and an axial hollow portion, a screw plunger movable in the axial hollow portion, a disc spring disposed in a bore space formed in the cylinder on the other side thereof, and a lock nut engageable to one end of the cylinder and disposed on the outer periphery of the piston. The sectional area of the hollow portion and the pressure receiving area of the bore space in the aforementioned bolt screwing device are determined in the ratio 1:3 or more. The hollow portion and the bore space are filled with grease.

The bolt screwing device is held by hand and operated to screw the bolt to be tightened into the female screw hole formed in the leading end portion of the piston upon insertion of the leading end portion of the piston through a clamp plate. In this state of the bolt screwing device engaged with the bolt, the screw plunger is turned to be screwed into the hollow portion. Thus, the leading end portion of the screw plunger presses the grease in the hollow portion, resulting in forcibly pushing the cylinder to the clamp plate side by the ratio 1:3 of the sectional area of the hollow portion and the pressure receiving area of the bore space. Consequently, the disc spring is tightened by the pushing force to make a gap between the cylinder and the lock nut.

At the same time, the clamp plate between the piston and bolt is pressed, thereby to pull the bolt. By tightening the lock nut until the gap between the cylinder and the lock nut disappears, i.e. the cylinder and the lock nut come into contact with each other, the bolt is fixed.

The aforementioned prior art bolt screwing device has been commercialized by the applicant of this invention and widely used at present. As the result of repeatedly using the bolt screwing device in succession, the applicant has recently become aware of the following inconveniences to be improved.

First, the aforementioned conventional bolt screwing device suffers a disadvantage such that, since it can neither restrict nor indicate the force tightening for the bolt, the bolt cannot suitably be tightened, and the screw plunger is occasionally tightened too much. When the screw plunger is tightened with an excessive force, the pressure of grease exceeds the withstanding strength of an O-ring set in the cylinder to snap off the O-ring, thus destroying the device.

Secondly, since the piston has one end portion (rear end portion) engaged with the screw plunger and the female screw hole formed in the other end portion (leading end portion) thereof, the work of installing the bolt screwing device on the bolt often becomes onerous, because the bolt screwing device must be turned to be engaged with the bolt while being held by a single hand or both hands so as to align the female screw hole of the bolt screwing device to the bolt. Accordingly, there has been a need for an improved compact and light-weight bolt screwing device capable of saving labor involved in tightening the bolt.

This invention seeks to provide a bolt screwing device capable of adjusting a bolt tightening force to the desired value.

This invention also seeks to provide a bolt screwing device capable of being supported by a bolt to be tightened without being held by hand, made small in size and light in weight so as to be easily attached to and detached form the bolt, and reducing the labor involved in tightening the bolt.

The bolt tightening device of this invention is characterized by comprising an output mechanism and an input mechanism, which output mechanism includes a main body constituted by a cylinder and a piston, a bolt receiving hole piercing through the central portion of the main body, and a space portion formed between the aforementioned cylinder and piston, which piston is movable in the cylinder in the axial direction of the cylinder so as to come in contact with the cylinder in the axial direction leaving the aforementioned space portion therebetween, and which input mechanism includes a hollow portion communicating with the aforementioned space portion and filled with a pressure medium, and a screw plunger movable in the aforementioned hollow portion to press the pressure medium in the aforementioned hollow portion and space portion. The aforementioned bolt receiving hole is bored merely in the form of a through hole in the cylinder or piston, but may be formed of through holes bored in both the cylinder and piston and aligned on a straight line.

The bolt screwing device according to this invention has the second feature wherein a pressure regulating valve for adjusting the pressing force of the pressure medium pressed by the screw plunger is provided in addition to the constituents of the first feature as described above.

The bolt screwing device according to this invention has the third feature wherein a bolt-tightening force indicator for indicating the pressing force of the pressure medium pressed by the screw plunger is disposed communicating with the hollow portion, in addition to the constituents of the first or second feature as described above.

The bolt screwing device according to this invention has the fourth feature wherein rotational-torque adjusting means for adjusting the pressing force of the pressure medium pressed by the screw plunger is disposed in addition to the constituents of the first, second or third feature as described above.

The bolt screwing device according to this invention has the fifth feature wherein the aforementioned output mechanism includes a lock mechanism for retaining the bolt in its tightened state in addition to the constituents of any of the first to fourth features as described above.

By screwing the screw plunger into the hollow portion to push the pressure medium filled in the hollow portion, the pressure increased by the ratio of the pressure-receiving area of the piston to the sectional area of the screw plunger is given to the piston through the pressure medium, thus exerting a stretching force to the bolt, consequently to tighten the bolt.

By adjusting the screwing force of the screw plunger with the rotational-torque adjusting means such as a torque wrench, the pressing force exerted on the pressure medium in the hollow portion by the screw plunger can be adjusted, so that the desired tightening force can be given to the bolt. That is to say, the rotational-torque to be applied to the screw plunger is previously determined to the prescribed torque by using the rotational-torque adjusting means. Then, when the rotational force produced by screwing the screw plunger exceeds the prescribed torque, the rotational-torque adjusting means works to release excessive rotational torque applied to the screw plunger. Accordingly, the pressing force of the pressure medium in the hollow portion can be adjusted to the desired value and properly applied to the bolt. As the rotational-torque adjusting means, a common torque wrench on the market may be used conveniently to tighten the bolt with a fixed (required) tightening force.

While the screw plunger is screwed into the hollow portion in the state of allowing the excessive rotational torque applied to the screw plunger to be released, the pressing force exerted to the pressure medium is transmitted to the pressure regulating valve communicating with the hollow portion through the pressure medium pressed in the hollow portion. When the pressing force reaches the prescribed pressure, the pressure regulating valve is operated to release the pressure of the pressure medium, consequently to tighten the bolt with the desired tightening force.

In the case of utilizing the pressure regulating valve for controlling the tightening force for the bolt, the pressure regulating valve is determined in advance so as to be operated at the prescribed tightening pressure, so that the tightening force is automatically adjusted with the pressure regulating valve while screwing the screw plunger. When using the bolt-tightening force indicator, manual rotation of the screw plunger is controlled so as to tighten the bolt with the desired force while observing the indicator. In the case of using the rotational-torque adjusting means, the pressing force with the pressure medium is pressed by the screw plunger is determined to the arbitrary value, thereby to tighten the bolt with the desired tightening force.

The bolt screwing device according to the present invention may be used to tighten a bolt used in a rolling machine including roller guides and other general purpose machines with the desired tightening force.

For a better understanding of the present invention and to show more clearly how it may be carried into effect, reference will now be made, by way of example, to the accompanying drawings, in which:-
FIG. 1 is a sectional view of a first embodiment of the bolt screwing device according to this invention, showing the state of loosening a bolt.
FIG. 2 is a sectional view of the first embodiment, showing the state of tightening the bolt.
FIG. 3 is a sectional view of a second embodiment of the bolt screwing device according to this invention.
FIG. 4 is a sectional view taken along the line A-A in FIG. 3.
FIG. 5 is a sectional view taken along the line B-B in FIG. 3.
FIG. 6 is a sectional view taken along the line C-C in FIG. 3.
FIG. 7 is a sectional view of a third embodiment of the bolt screwing device in use according to this invention, showing the state of loosening the bolt.
FIG. 8 is an enlarged right side view of FIG. 7.
FIG. 9 is an enlarged sectional view of the third embodiment, showing the state of tightening the bolt.
FIG. 10 is a sectional view of a fourth embodiment of the bolt screwing device according to this invention, showing the state of loosening the bolt.

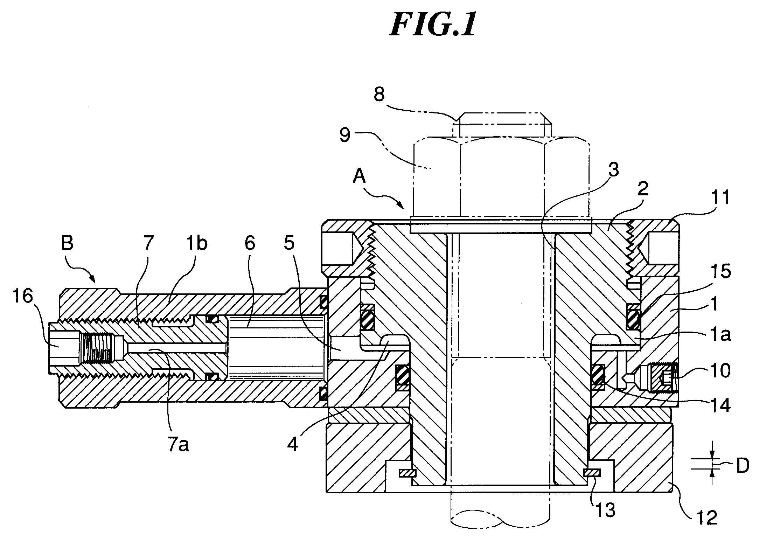

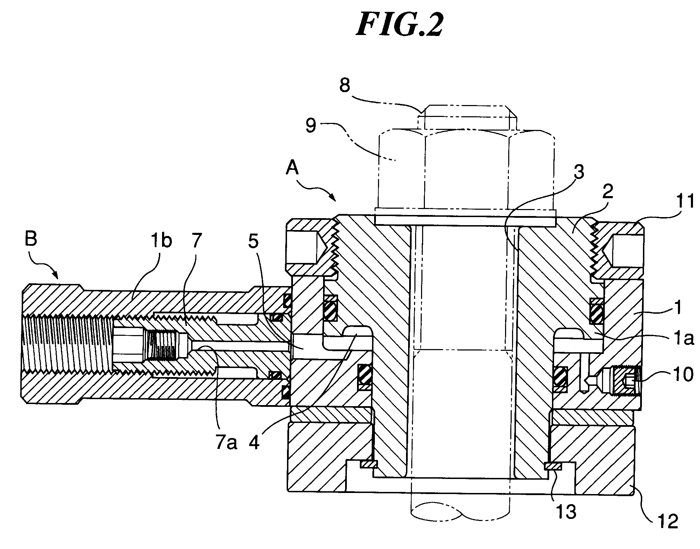

At the outset, the first embodiment of the present invention will be described with reference to FIG. 1 and FIG. 2.

The bolt screwing device according to this invention is provided with an output mechanism A and an input mechanism B.

The output mechanism A comprises a main body including a cylinder 1, a piston 2, a bolt receiving hole 3 piercing through the central portion of the main body, and a space portion 4 formed between the cylinder and piston.

The piston 2 is movable within the cylinder 1 in the axial direction of the cylinder by the prescribed distance D. The prescribed space portion 4 is defined between the piston 2 and the cylinder 1. The piston 2 is disposed in the cylinder 1 so as to come into contact with the cylinder 1 in the axial direction of the cylinder through the space portion 4. The bolt receiving hole 3 is formed through the piston 2 for allowing a bolt 8 to be inserted therethrough. The piston 2 is provided with a projection 1a so as to retain a space between itself and the pressure receiving surface of the cylinder when coming into contact with the cylinder 1. The space portion 4 communicates with a communicating path 5. This communicating path has one end connected to a hollow portion 6 in the input mechanism B as described later, and another end closed by a stopper 10.

When filling the space portion 4 and hollow portion 6 with grease serving as a pressure medium, the stopper 10 is taken off and exchanged for a grease nipple (not shown) to introduce the grease into the space portion 4. After filling the space and hollow portions with the grease, the grease nipple is replaced by the stopper 10.

Onto the outer periphery of one end portion (upper end portion in FIG. 1) of the piston, a lock nut 11 composing a part of a lock mechanism is engaged. This lock nut is engageable to one end surface of the cylinder 1. The other end portion of the piston 2 is inserted through a seat member 12 into a stopper ring 13 placed on the outer periphery of the other end portion of the cylinder 1. This stopper ring comes in touch with and is separated from the inner surface of the seat member 12 when the piston 2 is moved within the range of the distance D.

In the drawing, reference numeral 14 denotes an oil seal composed of an O-ring in the cylinder 1, numeral 15 denotes an oil seal composed of an O-ring in the piston 2.

The input mechanism B has the hollow portion 6 communicating with the space portion 4 and filled with grease, and a screw plunger 7. The hollow portion 6 is formed in a cylindrical retaining portion 1b formed on the side (left-hand portion in FIG. 1) of the cylinder 1. The hollow portion 6 is joined at its one end to the communicating path 5. The screw plunger 7 is screwed into the rear end portion of the hollow portion 6 and movable in the axial direction thereof. The screw plunger 7 is provided along its axis with an air vent hole 7a through which the grease is introduced into the hollow portion 6 and space portion 4 through the stopper 10. The one end of the air vent hole 7a is closed by a stopper 16. The screw plunger 7 is turned through the stopper 16 by use of a rotational torque regulating device (not shown). With the movement of the screw plunger 7, the grease in the hollow portion 6 is pressed.

The manner of tightening the bolt in the first embodiment will be described.

The stopper 10 is first removed from the cylinder 1 opposing to the piston 2 astride the space portion 4, and instead, the grease nipple is attached to fill up the hollow portion 6 communicating with the space portion with grease serving as the pressure medium.

In introducing the grease into the hollow portion, the stopper 16 is taken off to remove air from the space and hollow portions through the air vent hole 7a. Upon completion of filling the grease, the stoppers 16 and 17 are again installed on the screw plunger 7 and the cylinder 1, respectively.

Next, the bolt 8 is inserted through the bolt receiving hole 3 as shown in FIG. 1, while holding the bolt screwing device by hand. In this state, the bolt screwing device is provisionally retained by the bolt 8, and therefore, need not be held by hand. Of course, only when the bolt 8 is in a horizontal or upright posture, the device need not be held by hand. In such a state, a nut is engaged with the bolt 8 and screwed until it comes into contact with the end face of the piston 2. The screw plunger 7 is turned to be advanced in the hollow portion 6 from the position shown in FIG. 1 to the position shown in FIG. 2, consequently to force the grease in the hollow portion 6 into the space portion 4. Thus, the piston 2 moves in the bolt-tightening direction in which the bolt 8 is pulled (the upward direction in FIG. 1) by the pressure of the grease. The piston is permitted to move by the distance D. Since the nut 9 is thrust in the direction in which the bolt 8 is tightened, with the movement of the piston 2, the bolt is tightened up.

With the movement of the piston 2 toward the position shown in FIG. 2, the lock nut 11 installed on the piston 2 moves together, thereby to make a gap (not shown) equal to the maximum distance D by the piston can move between the lock nut 11 and the end face of the cylinder 1. Then, the lock nut 11 is rotated so as to close the gap between the lock nut and the cylinder until it touches the aforenoted one end face of the cylinder 1.

By closing the aforenoted gap with the lock nut 11 in the manner as described above, it is possible to secure the reliable tightening force of the bolt 8 even when the oil seals 14 and 15 in the cylinder 1 are broken thereby reducing the pressure of the pressure medium.

When loosening the bolt 8 thus tightened, the screw plunger 7 is turned in the direction opposite to that in which it is screwed up as described above. Thus, the pressing force of the grease is gradually decreased. At this time, as the piston 2 moves in the direction opposite to that in which the bolt 8 is pulled up, the force for tightening the bolt 8 is reduced. Finally, the nut 9 is manually turned to be taken off.

Since the screw plunger 7 is perpendicular to the axial direction of the bolt 8, it is possible to shorten the piston 2 and make the device thin.

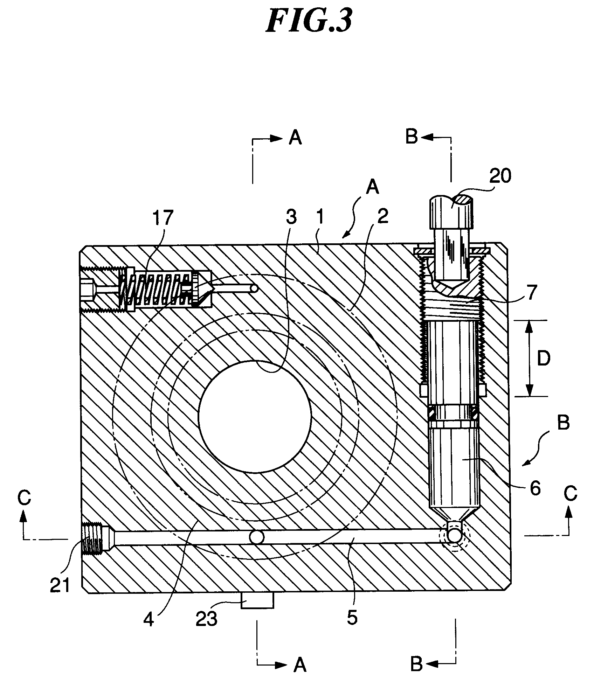

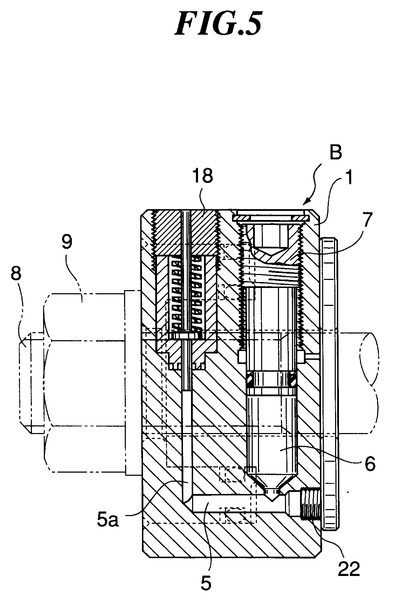

The second embodiment of this invention will be described with reference to FIG. 3 through FIG. 6.

The bolt screwing device of this embodiment is featured by providing a pressure regulating valve 17 and a bolt-tightening force indicator 18 in addition to an output mechanism A and an input mechanism B similar to those in the first embodiment.

Since the output mechanism A and input mechanism B in this embodiment are not substantially different in structure from those in the first embodiment, only the different constituents in this embodiment will be explained in detail.

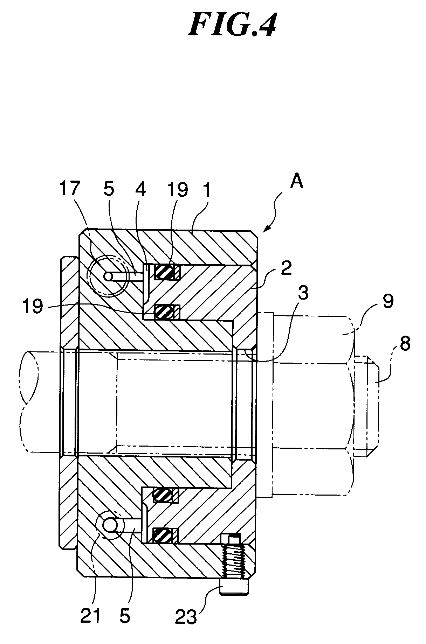

On the output mechanism A in FIG. 4, a cylinder 1 and a piston 2 are united, but one of them does not pierce through the other one. A hole 3 for receiving a bolt 8 is formed of through holes passing through the cylinder 1 and piston 2 and aligned on a straight line. The piston 2 is movable in the cylinder 1 so as to come in contact with the cylinder 1 with a prescribed space portion 4 therebetween. At opposite positions on the outer and inner peripheries of the one end portion (left end portion) of the piston 2, there are arranged oil seals 19 of O-rings.

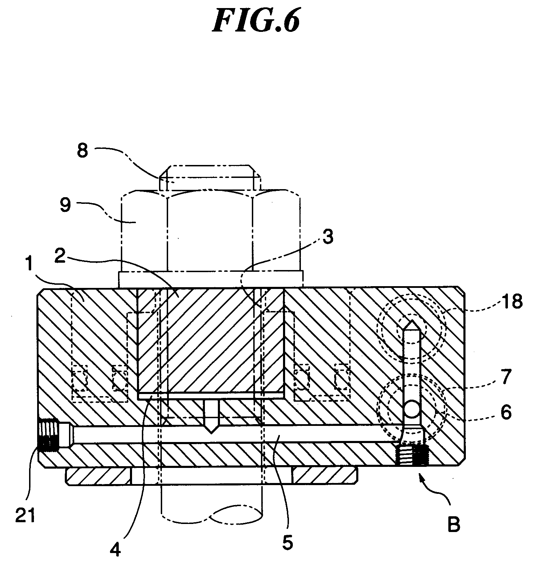

On the input mechanism B shown in FIG. 3 and FIG. 6, the hollow portion 6 filled with grease is defined within the cylinder 1 and communicates with the space portion 4 through a communicating path 5. A screw plunger 7 is movable in the hollow portion 6. By rotating rotational-torque adjusting means (torque wrench 20 in the illustrated embodiment), the screw plunger is moved back and forth.

A pressure regulating valve 17 is mounted on the rear side of the cylinder 1 in a horizontal posture as shown in FIG. 3 and FIG. 4. The pressure regulating valve 17 functions as a safety valve to maintain the pressure of the grease within the prescribed pressure range and control it below the excessive pressure. This valve communicates with the space portion 4 through the communicating path 5. As the pressing force produced by pressing the grease by forcing the screw plunger 7 forward is regulated to an arbitrary pressure by operating the pressure regulating valve 17, the bolt 8 can be tightened up with the desired tightening force.

The bolt-tightening force indicator 18 is disposed on one side of the cylinder 1 in parallel with the screw plunger 7 as shown in FIG. 3, FIG. 5 and FIG. 6. The bolt-tightening force indicator 18 functions to display the pressure value of the grease pressed by the screw plunger 7 in terms of a tightening force for the bolt 8. Therefore, the bolt-tightening force indicator 18 is provided with a branch path 5a diverged from the communicating path 5 connected with the screw plunger 7. The bolt-tightening force indicator 18 has a function of displaying the pressing force of the grease pressed by the screw plunger 7 itself or in terms of a tightening force for the bolt. The tightening force for the bolt 8 can be controlled by turning the screw plunger 7 on the basis of the indicated value.

It is desirable to use the torque wrench 20 capable of determining prescribed torque value and ceasing to tighten the bolt when the tightened torque reaches the prescribed torque value. The state in that the actual torque value reaches the torque value to which the dial reading on the rotational-torque adjusting means is set can be recognized by use of an alarm light or other warning means or by visually observing the adjusting means.

In the drawings, reference numerals 21 and 22 denote stoppers for closing one end of the communicating path 5, and numeral 23 denotes a bolt for retaining the piston 2.

The methods for tightening the bolt and adjusting the tightening force in the second embodiment will be explained.

The method for tightening the bolt in the second embodiment is the same as that described for the first embodiment. First, while holding the bolt screwing device by hand, the bolt 8 to be tightened is inserted through the bolt receiving hole 3 in the device. Then, the nut 9 is installed on the bolt 8 and screwed until coming in touch with the end face of the piston 2 (FIG. 4). Thereafter, the screw plunger 7 is turned by use of the torque wrench 20 to press the grease filled in the hollow portion 6 and space portion 4. Consequently, the piston is pushed by the pressure of the grease to force the nut in the direction in which the bolt is stretched. Thus, the bolt is tightened.

Accordingly, the bolt 8 can be tightened only by the force produced by turning the screw plunger 7 with the torque wrench 20.

The method for adjusting the bolt tightening force will be described.

For instance, if there is a fear of breaking any mechanical elements by tightening the bolt 8 with a force exceeding the prescribed tightening force, the bolt is required to be tightened exactly with the prescribed tightening force. In order to tighten exactly the bolt 8 with the prescribed tightening force, the pressing force of the grease pressed by screwing the screw plunger 7 is adjusted to an arbitrary pressure value by operating the pressure regulating valve 17 to determine the prescribed tightening force for the bolt. Then, the bolt 8 is tightened with the prescribed tightening force.

It is more effective to adjusting the rotation of the screw plunger 7 while observing the bolt-tightening force indicator 18 so as to tighten the bolt 8 exactly with the prescribed tightening force. That is to say, in this bolt-tightening force adjusting method, while observing the value displayed on the bolt-tightening force indicator 18 showing the pressing force of the grease pressed by the screw plunger 7 itself or in terms of a tightening force for the bolt, the bolt-tightening force is controlled in rotating the screw plunger.

In another bolt-tightening force adjusting method, the rotational torque of the screw plunger 7 is controlled with the torque wrench 20 so that the pressing force of the grease pressed by the screw plunger can be determined to an arbitrary rotational force (i.e. the pressure to be applied to the grease is adjusted with the rotational torque of the screw plunger 7). Consequently, the bolt can be exactly tightened with the prescribed tightening force.

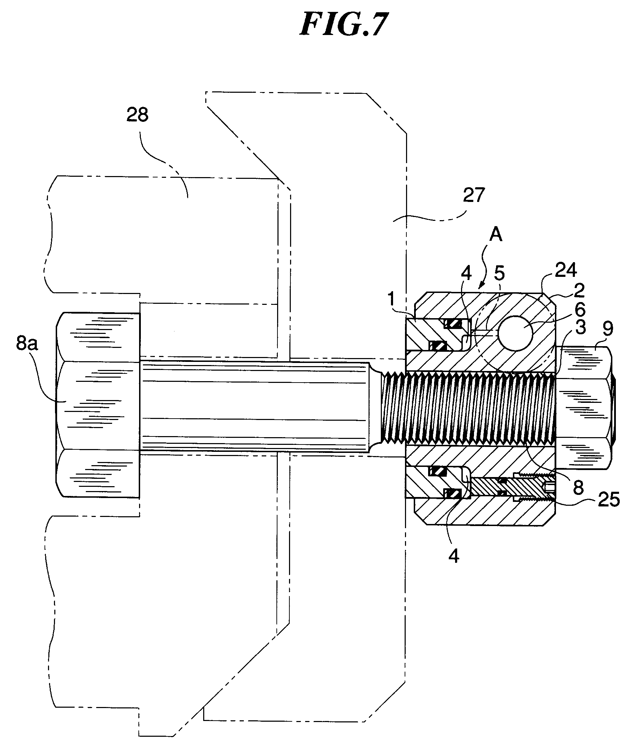

The third embodiment of this invention will be described with reference to FIG. 7 through FIG. 9.

In this embodiment, the relationship of a cylinder 1 and piston 2 constituting the main body of an output mechanism A is substantially the same as that in the first embodiment. Through the cylinder 1, the axial portion of the piston 2 is inserted movably, and a space portion 4 is formed between the cylinder and piston. Through the central portion of the piston, there is bored a bolt receiving hole 3. The third embodiment is provided within the piston 2 with a hollow portion 6 and screw plunger 7 constituting an input mechanism B. In this point, this embodiment is distinct from the foregoing embodiments. The space portion 4 and the hollow portion 6 communicate with each other through a communicating path 5. One end portion of the screw plunger 7 is covered with a dust cover 24.

The third embodiment is featured in that a lock bolt 25 composing one part of a lock mechanism for maintaining the state of tightening the bolt 8 is screwed in the piston 2 along the bolt receiving hole 3, so that the leading end of the lock bolt can be in contact with the end face of the cylinder 1. This lock bolt is used for attaining the purpose similar to the aforementioned lock nut 11.

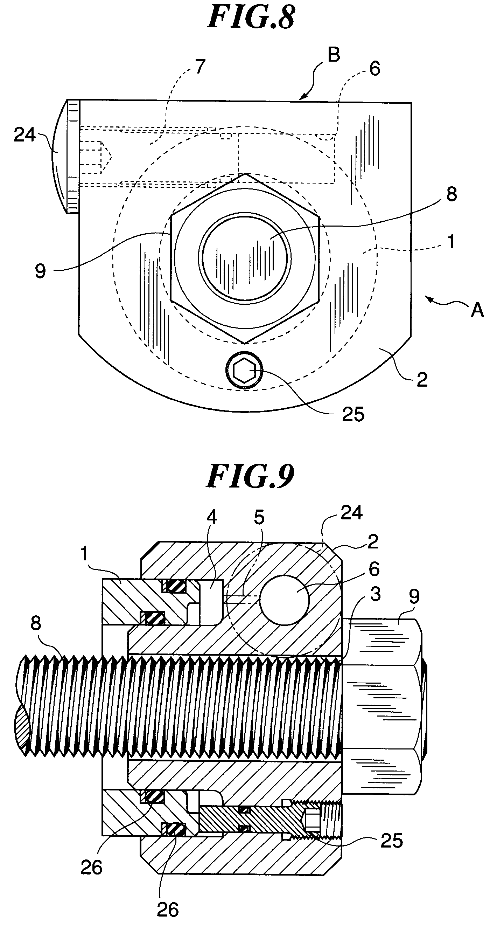

Use of the lock bolt 25 will be described. When the piston 2 is moved rightward in FIG. 9 by virtue of the grease pressed in the space portion 4, the lock bolt moves in the same direction, consequently to form a gap between the lock bolt and the cylinder 1. At this time, by tightening up the lock bolt 25 so as to bring the leading end thereof into contact with the cylinder, the bolt is maintained in its tightened state.

Reference numeral 8a denotes a bolt head, and numeral 26 denotes an oil seal made of an O-ring.

The method for tightening the bolt in this third embodiment will be described.

By turning forward the screw plunger 7 with a torque wrench (not shown), the grease filled in the hollow portion 6 and space portion 4 is pressed. The piston 2 is moved rightward in FIG. 7 by the pressing force of the grease. With the movement of the piston, the nut 9 is pushed to force the bolt 8 in its stretching direction. As a result, a clamp plate 27 is pressed against a fixing portion side 28 by the bolt 8.

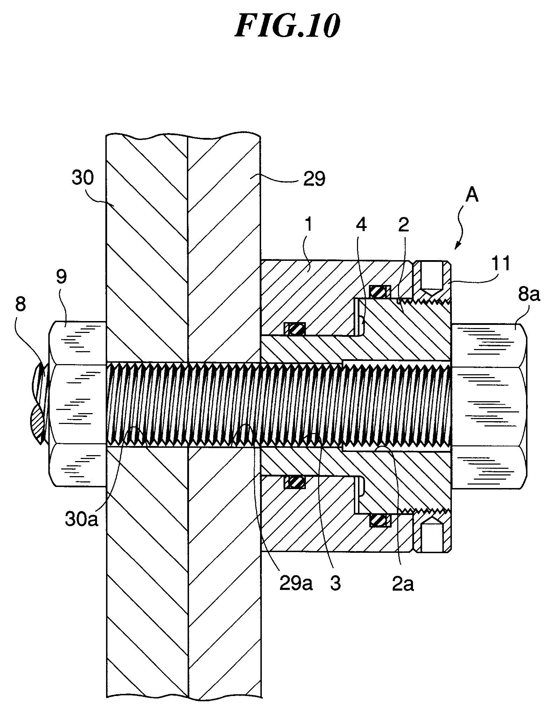

In FIG. 10 is shown the fourth embodiment of this invention, wherein a main body comprises a cylinder 1 and a piston 2 having a bolt receiving hole 3 bored in the form of a through hole. The bolt receiving hole is provided on one end portion (right-hand portion in the drawing) with a female screw portion 2a to be engaged with the male screw portion of the bolt 8. Thus, the piston and the bolt are joined in the state of bringing the head 8a of the bolt 8 into touch with the end face of the piston 2. Reference numeral 29 denotes a fixing portion side, and numeral 29a denotes a hole bored in the fixing portion side for receiving the bolt 8 therethrough. Reference numeral 30 denotes a side portion to be fixed, and numeral 30a denotes a hole formed in the side portion to be fixed for receiving the bolt 8 therethrough. The other components are substantially the same as those in the foregoing embodiments.

In the fourth embodiment, the hole 29a and 30a may have female screw portions engageable to the bolt 8, respectively. In this case, the female screw portion 2a is unnecessary.

A rotational-torque adjusting means 20 may be assembled within the cylinder 2.

Although the cylinder is assigned by the numeral 1 and the piston is assigned by the numeral 2 in the aforesaid first to fourth embodiments, the element denoted by numeral 2 may be a cylinder, and the element denoted by numeral 1 may be a piston as a countermeasure.

As is apparent from the foregoing description, according to the present invention, since the main body composed of the united cylinder and piston is provided with a bolt receiving hole bored in the form of a through hole for permitting the bolt to be inserted therethrough without use of a disc spring, the bolt screwing device can be supported in tightening the bolt without being held by hand. Besides, since the entire device of this invention can be made small in size and light in weight, attaching and detaching of the device relative to the bolt can be easily carried out, consequently to lighten the labor of tightening the bolt and attain labor saving. Furthermore, since the device of this invention includes the pressure regulating valve, bolt-tightening force indicator and rotational torque regulating device, the bolt tightening force can be adequately adjusted to the prescribed force to obtain the desirable tightening force. Moreover, since the bolt can be tightened exactly with the prescribed tightening force, the device can be prevented from being damaged. Also, by mounting the lock mechanism on the output mechanism, the bolt tightened can be prevented from being loosened even when the pressure of the pressure medium is released.

As can be readily appreciated, it is possible to deviate from the above embodiments of the present invention and, as will be readily understood by those skilled in this art, the invention is capable of many modifications and improvements within the scope and spirit thereof. Accordingly, it will be understood that the invention is not to be limited by these specific embodiments, but only by the scope and spirit of the appended claims.

## Claims

1. A bolt tightening device comprising an output mechanism and an input mechanism,
said output mechanism including a main body formed by a cylinder having an axial direction and a piston, a bolt receiving hole extending through said main body, and a space portion formed between said cylinder and piston, which piston is movable in said cylinder in said axial direction of said cylinder so as to come in contact with said cylinder with said space portion left therebetween and,
said input mechanism including a hollow portion communicating with said space portion and filled with a pressure medium, and a screw plunger movable in said hollow portion to press said pressure medium in said hollow portion and space portion.

2. A bolt tightening device according to claim 1, wherein said piston extends along said cylinder in said axial direction of said cylinder, said bolt receiving hole is formed in the axial center portion of said piston, and said cylinder is provided on its side with a cylindrical retaining portion through which said hollow portion is bored.

3. A bolt tightening device according to claim 1, wherein said piston extends along said cylinder in said axial direction of said cylinder, said bolt receiving hole is formed in the axial centre portion of said piston, and said hollow portion in the piston is bored perpendicular to said bolt receiving hole.

4. A bolt tightening device according to any one of the preceding claims further comprising a pressure regulating valve for adjusting a pressing force of said pressure medium pressed by said screw plunger.

5. A bolt tightening device according to any one of the preceding claims, further comprising a bolt-tightening force indicator for indicating a pressing force of said pressure medium pressed by said screw plunger, which indicator is connected with said hollow portion.

6. A bolt tightening device according to any one of the preceding claims further comprising a rotational-torque adjusting means for adjusting a pressing force of said pressure medium pressed by said screw plunger.

7. A bolt tightening device according to any one of the preceding claims, wherein said output mechanism includes a lock mechanism for retaining the bolt in its tightened state.

8. A bolt tightening device according to claim 7, wherein said lock mechanism includes a lock bolt to be screwed in said piston, said lock bolt movable along said bolt receiving hole and being permitted to come in contact with said cylinder.
